Europäisches Patentamt

European Patent Office

Office européen des brevets

(11) Publication number: **0 102 414**
**B1**

(12) **EUROPEAN PATENT SPECIFICATION**

(45) Date of publication of patent specification: **21.01.87**

(51) Int. Cl.⁴: **A 43 B 23/16,** B 32 B 27/12

(21) Application number: **82304050.6**

(22) Date of filing: **30.07.82**

(54) Reinforcing laminate.

(43) Date of publication of application:
**14.03.84 Bulletin 84/11**

(45) Publication of the grant of the patent:
**21.01.87 Bulletin 87/04**

(84) Designated Contracting States:
**DE GB IT**

(56) References cited:
**DE-A-1 760 865
GB-A- 621 867
GB-A-1 182 669
US-A-3 427 733
US-A-3 531 367**

(73) Proprietor: **FOSS MANUFACTURING
COMPANY, INC.
One Whitney Drive
Ward Hill Haverhill Massachusetts 01830 (US)**

(72) Inventor: **Goodwin, Robert F.
4 Marlboro Road
Georgetown Massachusetts 01833 (US)**

(74) Representative: **Jones, Ian et al
POLLAK MERCER & TENCH High Holborn House
52-54 High Holborn
London WC1V 6RY (GB)**

Courier Press, Leamington Spa, England.

## Description

The present invention relates to reinforcing laminates, particularly in connection with reinforcing elements for shoes and more particularly military and outdoorsmen's boots subject to rugged long-term use, water, oil and weather exposure.

In such boot or related application, the use of external adhesives is undesirable because (a) long-term usage tends to degrade such external adhesives, (b) slow, costly processing is entailed with latex adhesives, (c) critical time/temperature/pressure relationships during manufacture are often required, and (d) residual thermosensitivity of hot melt adhesives is a further handicap. The requirement is not completely met by ionic resin stiffening elements as described in U.S. Patent 3427733 to Beckwith. Older more tranditional materials such as the polyethylene reinforced fabric of U.S. Patent 2734289 to Heaton et al., as well as cardboard or rubber, have also proven inadequate.

U.K. Patent Specification 1182669 discloses a material from which a shoe stiffener can be made, the material consisting of respective fibrous layers sandwiching a resin layer into which individual fibres of the fibrous layers are needled in a separate process step after the resin and fibrous layers have been brought together.

The present invention provides a method of making a laminate comprising a thermoplastic resin layer and, secured thereto, a cloth layer, the method including the step of impregnating the cloth layer with a solvent- or heat-activatable styrene saturant in liquid form and being characterised by the pre-impregnation steps of extruding a thermoplastic resin to form the resin layer and bonding a cloth layer to the freshly-extruded resin layer and in that the styrene saturant is caused or allowed to harden in the cloth layer to render that layer stiff.

The invention also provides a laminate comprising an extruded thermoplastic resin layer and, secured thereto, a cloth layer impregnated with a hardened solvent- or heat-activatible styrene saturant, characterised in that the cloth layer is secured to the resin layer by bonding of the cloth layer to the resin layer when the resin layer is freshly extruded.

The saturant may comprise styrene or a mixture of styrene and one or more copolymerisable monomers.

The present invention can thus provide a mouldable, stiff reinforcing laminate which can be water, oil, impact and weather resistant. The laminate can be self-adhering to a carrier surface or substrate and/or cover layer to be reinforced by the adhered laminate. The laminate may be produced at a high rate and utilizing inexpensive components and materials.

In accordance with the invention, cloth is laminated with a thermoplastic resin layer and then saturated with a solvent- or heat-activatable styrene stiffening material, which is activatable by organic solvents or through heat activation. Preferably two such fabric layers are bonded to a freshly extruded resin layer to sandwich it as drawn from an extruder. The preliminary laminate thus formed is then caused to be saturated in its fabric layer(s) with a solvent- or heat-activatable impregnant to produce a final laminate. The final laminate thus formed can be shipped in rolls and spread and cut to desired forms by users for moulding and adhesively bonding to a supporting substrate and (optionally) overlapping with a cover or liner, also by adhesive bonding. The adhesion can be afforded by preliminary solvent- or heat-activating (preferably solvent-activating) at least one of the impregnant layers prior to pressure and heat activation of the laminate in the course of moulding.

The fabric provides exposed fibrous ends which can adequately bond to freshly extruded core resin and penetrate therewithin for geometric locking between the fabric and such core resin to adhere the fabric layer to the resin before and after impregnating the fabric.

Preferably the resin layer is an ionic copolymer of a monomer feed comprising at least 50 mole percent of an α-olefin having the general formula $RCH=CH_2$ where R is selected from the class consisting of hydrogen and 1 to 8 carbon atom alkyl radicals, 0.12 to 25 mole precent of an α,β-ethylenically unsaturated monocarboxylic acid and 0.2 to 25 mole percent of an α,β-ethylenically unsaturated di-carboxylic acid, the copolymers having at least a uniformly distributed 10 percent of the carboxylic acid groups of the mono- and di-carboxylic acids therein neutralized by metal ions of 1 to 3 valence.

The tough resin layer may also be a thermoplastic hydrocarbon resin derived from olefin monomer described in U.S. Patent No. 3 427 733 of February 18, 1979 to Beckwith describing a laminate of such resin with fabric affording advantages in a stiffening element. Such material, an "ionomeric resin" incorporating therein ionic bonds in a thermoplastic polymer resin, may be more fully described as an ionic copolymer selected from the class consisting of polymers of α-olefins having the general formula $RCH=CH_2$ where R is a radical selected from the class consisting of hydrogen and alkyl radicals having from 1 to 8 carbon atoms, the olefin content of the polymer being at least 50 mole percent, based on the polymer, and an α,β-ethylenically unsaturated monocarboxyic acid, the acid monomer content of the polymer being from 0.2 to 25 mole percent, based on the polymer, the monomer-carboxylic acid polymer containing uniformly distributed through the polymer a metal ion having a valence of 1 to 3 inclusive, and polymers of said olefin content and a α,β-ethylenically unsaturated dicarboxylic acid, the acid content of the polymer being from 0.2 to 25 mole percent based on the polymer, the dicarboxylic acid copolymer containing uniformly distributed throughout the polymer a monovalent metal ion, in which at least 10 percent of the carboxylic acid groups of the monovalent and divalent carboxylic acid polymers are neutralized by the metal ions.

Other usable core layers in lieu of the above described ionomeric resin include polyethylene, polypropylene, ethylene-vinyl-acetate, ethylene-ethylacrylate, acrylonitrile - butadiene - styrene, and various formulated blends of the above, all the foregoing preferably being in thicknesses ranging from 0.25 mm to 1.3 mm (0.010 to 0.050 inches). Such materials in such thicknesses would normally be inadequate, either alone, or as laminated to cloth layers, for modern standards of box and toe counter usage in most modern applications, particularly military boot usage, but can be provided in improved and acceptable form in more applications by the present invention.

Preferably, the ionomeric core layer has a thickness of 0.25 mm to 1.3 mm (0.010 to 0.050 inches), and can be 1/2 to 2/3 of the thicknesses of such resin layers employed in the context of practical commercial use (0.64 mm (0.025 inches) and higher) of the invention recited in the said Beckwith patent. Similar reductions of thickness can be made in equivalent fashion when using the other core materials mentioned above.

Each cloth layer may comprise woven, non-woven, spunbonded, spunlaced, stitchbonded, melt-bonded, chemically bonded and needle layers of cotton, rayon, nylon, polyester, polypropylene and blends of the above. Weight ranges can be from 34 $gm^{-2}$ to 270 $gm^{-2}$ (1 oz $yd^{-2}$ to 8 oz $yd^{-2}$). The impregnant may be polystyrene per se or may comprise copolymers of styrene with one or more other comonomers, for example butadienes, acrylonitrile and acrylates.

Styrene-butadiene, styrene-acrylonitrile, styrene-acrylate, acrylonitrile-butadiene, polyvinyl acetate and polyvinyl alcohol saturated fabrics are per se known as reinforcing materials for shoe counters and box toes. Preferably 100% polystyrene or a 90−10% (by weight) polystyrene-butadiene copolymer is employed. Polystyrene is activatable in organic solvents. Preferably one of toluene, methyl ethyl ketone, methylene chloride or 1,1,1 - trichloroethane is utilized. The activation may be effected by surface coating the polystyrene with solvent or dipping the polystyrene layer (and any other layer laminated thereto) into the solvent. Heat activation may be used additionally or in lieu of solvent activation for polystyrene or other fabric saturants. As used herein, "heat activation" includes radiation as well as conductive, corrective, radiant and external heating and chemical internal heating.

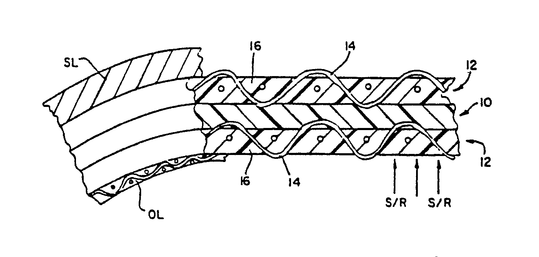

The invention will now be further described by way of example only with reference to the drawing of which the single figure is a highly schematic cross-section through a reinforcing laminate embodying the present invention.

The laminate of the drawing comprises a core 10 of ionomeric resin as described above sandwiched between saturated fabric layers 12, each of which comprises a non-woven or woven fabric 14. The ionomeric resin layer is produced as described in U.S. Patent No. 3 264 272 to Rees and extruded as mentioned in the Beckwith patent. The fabric layers are applied in contact to the ionomeric resin layer to form an initial laminate. The resulting assemblage is then passed through water-base latex styrene to form a final laminate. Optionally the final laminate product may be post calendared with a high pressure roller at room or elevated temperature.

There are exposed ends of the fabric 14 which lock into the ionomeric resin layer 10 and enhance bonding generally between the resin layer 10 and the fabric 14 and thus with layers 12. The laminate so produced can be rolled up for shipping, cut to desired shapes such as for counters, box toe blanks and the like and prepared for moulding by the user by solvent activating or heat activating the saturant of the saturated fabric layer, the application of solvent or heat being indicated by the arrows S/R. In the case of polystyrene saturant, the dipping of the laminate as a whole in aromatic solvents causes substantial softening of the saturant causing in turn particularly desirable moulding properties as well as adhesive properties. The cut-to-shape laminate portion as a whole can be heated and pressed in the moulding apparatus for further softening to enable moulding of the laminate as a whole to a desired shape and to effect adhesive bonding of the fabric layers 12 to a substrate layer SL and/or to an overlayer or cover layer OL via the impregnants. The steps of substrate and/or liner adhesive bonding can be made simultaneously with the moulding of the laminate or promptly thereafter in a separate step while the adhesive activity is high.

The resulting reinforcing element or reinfocing element/carrier combination (e.g., a military boot component) can afford a long, reliable service life with greater resistance to extreme conditions of weathering, oil exposure and heavy usage, particularly overcoming the problem of moisture vulnerability and impact resistance which has been a weakness of hitherto known products.

The solvent activation can be done at room temperature and followed by a drying period that can be controlled to be fast or slow depending upon the solvent selected and the product density. The polystyrene/fabric layers exhibit high stiffness and adhesive properties while the necessary toughness in the context of such laminate usage is provided by the ionomeric resin core. The combination as a whole avoids the use of hot melt adhesives for bonding the reinforcement to a substrate, the bonding being effected substantially solely through the activated styrene saturant, utilizes less styrene than in conventional styrene/fabric reinforcements, eliminates heat and moisture sensitivity through elimination of hot melt adhesives, allows use of less ionomeric resin or other resin than in conventional resin reinforcements and on the whole provides better bonding between integral parts of the reinforced (and optionally overlaid with a liner) substrate combination than in conventional combinations of such type and within the reinforcement, per se.

The combination further allows a faster shoe-making process because the toes are held firm by the plastic core while the activated styrene saturant in the cloth layer is "setting". This means that subsequent shoe-making steps can proceed more rapidly than with conventional styrene toes which must be allowed to age until firmness has developed.

**Claims**

1. A method of making a laminate comprising a thermoplastic resin layer (10) and, secured thereto, a cloth layer (12, 14), the method including the step of impregnating the cloth layer with a solvent- or heat-activatable styrene saturant in liquid form and being characterised by the pre-impregnation steps of extruding a thermoplastic resin to form the resin layer and bonding a cloth layer to the freshly-extruded resin layer and in that the styrene saturant is caused or allowed to harden in the cloth layer to render that layer stiff.

2. A method according to claim 1, characterised in that the cloth layer (12, 14) is applied to the resin layer (10) as the resin layer leaves a nozzle at which the extrusion step takes place.

3. A method according to claim 1 or 2, characterised by the step of activating the hardened saturant in the cloth layer (12, 14).

4. A method according to claim 3, characterised in that the laminate is moulded to a desired shape by application of pressure to the laminate, the saturant being activated prior to or during the moulding step.

5. A method according to claim 3, characterised by the step of bonding at least one substrate or cover layer (SL, OL) to the cloth layer (12, 14), the bonding being through adhesion provided by the activated saturant.

6. A method according to claim 5, characterised by the step of calendaring the laminate and substrate or cover layer (SL, OL) after bonding.

7. A method according to claim 5, characterised in that the laminate and substrate or cover layers (SL, OL) are subjected to pressure so as to be simultaneously bonded and moulded to a desired shape whilst the saturant is activated and the cloth (12, 14) and substrate or cover layers are in contact.

8. A method according to claim 7, characterised in that the saturant is activated in a step which precedes the simultaneous bonding and moulding step.

9. A method according to claim 4, 7 or 8, characterised by heating of the laminate and any substrate or cover layer (SL, OL) simultaneously with the application of moulding pressure.

10. A method according to claim 5, characterised in that the laminate is subjected to pressure so as to be moulded to a desired shape in a step which precedes the bonding of the substrate or cover layer (SL, OL).

11. A method according to claim 10, characterised in that the saturant is activated in the moulding step for the bonding step.

12. A method according to any one of claims 3 to 11, characterised in that the saturant is solvent activated.

13. A method according to claim 12, characterised by dipping the laminate in the solvent to cause activation.

14. A method according to claim 12, characterised by surface coating of the cloth layer with solvent to cause activation.

15. A method according to any one of claims 12 to 14, characterised in that the solvent is toluene, methyl ethyl ketone, methylene chloride or 1,1,1 - trichloroethane.

16. A method according to any one of claims 3 to 8 and 10 to 15, characterised in that the saturant is heat activated.

17. A laminate comprising an extruded thermoplastic resin layer (10) and, secured thereto, a cloth layer (12, 14) impregnated with a hardened solvent- or heat-activatable styrene saturant, characterised in that the cloth layer is secured to the resin layer by bonding of the cloth layer to the resin layer when the resin layer is freshly extruded.

18. A laminate according to claim 17, characterised in that the thermoplastic resin is an ionic copolymer of a monomer feed comprising at least 50 mole percent of an $\alpha$-olefin having the general formula $RCH=CH_2$, where R represents hydrogen or an alkyl radical having 1 to 8 carbon atoms, 0.12 to 25 mole percent of an $\alpha,\beta$-ethylenically unsaturated monocarboxylic acid, and 0.2 to 25 mole percent of an $\alpha,\beta$-ethylenically unsaturated dicarboxylic acid, the copolymer having at least a uniformly distributed 10 percent of the carboxylic acid groups of the mono and dicarboxylic acids therein neutralized by metal ions of 1 to 3 valence.

19. A laminate according to claim 17, characterised in that the thermoplastic resin is a copolymer of a monomer feed comprising at least 50 mole percent of an $\alpha$-olefin having the general formula $RCH=CH_2$, where R represents hydrogen or an alkyl radical having 1 to 8 carbon atoms, and 0.2 to 25 mole percent of an $\alpha,\beta$-ethylenically unsaturated monocarboxylic acid, at least a uniformly distributed 10 percent of the carboxylic acid groups being neutralized by a metal ion having a valency of 1 to 3 inclusive, or a copolymer of a monomer feed comprising at least 50 mole percent of an $\alpha$-olefin having the general formula $RCH=CH_2$, where R represents hydrogen or an alkyl radical having 1 to 8 carbon atoms, and 0.2 to 25 mole percent of an $\alpha,\beta$-ethylenically unsaturated dicarboxylic acid, at least a uniformly-distributed 10 percent of the carboxylic acid groups being neutralised by a monovalent metal ion.

20. A laminate according to claim 18, characterised in that the resin layer (10) is of polyethylene, polypropylene, ethylene-vinyl acetate copolymer, ethylene-ethyl acrylate copolymer, acrylonitrile - butadiene - styrene copolymer, or a blend of any two or more thereof.

21. A laminate according to any one of claims 17 to 20, characterised in that the resin layer (10) is sandwiched between two cloth layers (12, 14).

22. A laminate according to any one of claims 17 to 21, characterised in that the or each cloth layer (12, 14) is secured to a substrate or cover layer (SL, OL) by the adhesive property of the styrene saturant.

23. A laminate according to any one of claims 17 to 22, characterised in that the resin layer (10) is from 0.25 to 1.3 mm thick.

24. A laminate according to any one of claims 17 to 23, characterised in that the saturant comprises polystyrene or a copolymer of styrene and one or more other comonomers.

25. A laminate as claimed in claim 24, characterised in that the saturant comprises a copolymer containing 90% by weight styrene and 10% by weight butadiene.

26. A shoe stiffener characterised in that it comprises a laminate according to any one of claims 17 to 25.

**Patentansprüche**

1. Verfahren zur Herstellung eines Laminats, bestehend aus einer thermoplastischen Harzschicht (10) und einer daran befestigten Gewebeschicht (12, 14), bei dem die Gewebeschicht mit einem Lösungsmittel- oder Wärme - aktivierbarem Styrol - Imprägniermittel in flüssiger Form imprägniert wird, dadurch gekennzeichnet, daß als Vorimprägnierungsstufe ein thermoplastisches Harz extrudiert wird, um die Harzschicht zu bilden, eine Gewebeschicht mit der gerade extrudierten Harzschicht verbunden wird, und daß das Styrol-Imprägniermittel in der Gewebeschicht gehärtet wird oder aushärten kann, um die Schicht zu versteifen.

2. Verfahren nach Anspruch 1, dadurch gekennzeichnet, daß die Gewebeschicht (12, 14) auf die Harzschicht (10) aufgebracht wird, wenn die Harzschicht eine Düse verläßt, an der die Extrusionsstufe stattfindet.

3. Verfahren nach Anspruch 1 oder 2, dadurch gekennzeichnet, daß das gehärtete Imprägnierungsmittel in der Gewebeschicht (12, 14) aktiviert wird.

4. Verfahren nach Anspruch 3, dadurch gekennzeichnet, daß das Laminat durch Druckbeaufschlagung in die Sollform gebracht wird, und daß das Imprägnierungsmittel vor oder während der Formstufe aktiviert wird.

5. Verfahren nach Anspruch 3, dadurch gekennzeichnet, daß wenigstens eine Substrat- oder Abdeckschicht (SL, OL) an der Gewebeschicht (12, 14) durch die durch das aktivierte Imprägnierungsmittel bewirkte Adhäsion befestigt wird.

6. Verfahren nach Anspruch 5, dadurch gekennzeichnet, daß das Laminat und das Substrat oder die Abdeckschicht (SL, OL) nach der Befestigung kalandriert werden.

7. Verfahren nach Anspruch 5, dadurch gekennzeichnet, daß das Laminat und das Substrat oder die Abdeckschicht (SL, OL) mit Durck beaufschlagt werden, damit die Befestigung und Formung in eine Sollform gleichzeitig erfolgen, während das Imprägnierungsmittel aktiviert wird und die Gewebeschicht (12, 14) und das Substrat oder die Abdeckschicht einander berühren.

8. Verfahren nach Anspruch 7, dadurch gekennzeichnet, daß das Imprägnierungsmittel in einer der gleichzeitigen Befestigungs- und Formstufe vorangehenden Stufe aktiviert wird.

9. Verfahren nach Anspruch 4, 7 oder 8, dadurch gekennzeichnet, daß das Laminat und das Substrat oder die Abdeckschicht (SL, OL) gleichzeitig mit der formgebenden Druckbeaufschlagung erhitzt wird.

10. Verfahren nach Anspruch 5, dadurch gekennzeichnet, daß das Laminat zur Formung in eine Sollform in einer Stufe mit Druck beaufschlagt wird, die der Befestigung des Substrats oder der Abdeckschicht (SL, OL) vorangeht.

11. Verfahren nach Anspruch 10, dadurch gekennzeichnet, daß das Imprägnierungsmittel in der Formgebungsstufe für die Befestigungsstufe aktiviert wird.

12. Verfahren nach einem der Ansprüche 3 bis 11, dadurch gekennzeichnet, daß das Imprägnierungsmittel lösungsmittelaktiviert wird.

13. Verfahren nach Anspruch 12, dadurch gekennzeichnet, daß das Laminat zur Aktivierung in das Lösungsmittel eingetaucht wird.

14. Verfahren nach Anspruch 12, dadurch gekennzeichnet, daß die Gewebeschicht mit dem Lösungsmittel zur Aktivierung Oberflächenbeschichtet wird.

15. Verfahren nach einem der Ansprüche 12 bis 14, dadurch gekennzeichnet, daß das Lösungsmittel Toluol, Methyl-Äthyl-Keton, Methylenchlorid oder 1,1,1 - Triäthylchloride ist.

16. Verfahren nach einem der Ansprüche 3 bis 8 und 10 bis 15, dadurch gekennzeichnet, daß das Imprägnierungsmittel wärmeaktiviert wird.

17. Laminat, bestehend aus einer extrudierten thermoplastischen Harzschicht (10) und einer daran befestigten Gewebeschicht (12, 14), die mit einem gehärteten Lösungsmittel- oder Wärmeaktivierbaren Styrol - Imprägnierungsmittel gehärtet ist, dadurch gekennzeichnet, daß die Gewebeschicht an der Harzschicht durch Verbinden der Gewebeschicht mit der gerade extrudierten Harzschicht befestigt wird.

18. Laminat nach Anspruch 17, dadurch gekennzeichnet, daß das thermoplastische Harz ein Ionencopolymer eines Monomer - Ausgangsstoffes, bestehend aus wenigstens 50 Mol-Prozent eines $\alpha$-Olefins mit der allgemeinen Formel $RCH=CH_2$, wobei R Wasserstoff oder ein Alkylradikal mit 1 bis 8 Kohlenstoffatomen darstellt, 0,12 bis 25 Mol-Prozent einer $\alpha$-$\beta$-äthylenisch ungesättigten Monocarbonsäure und 0,2 bis 25 Mol-Prozent einer $\alpha$-$\beta$-äthylenisch ungesättigten Dicarbonsäure, ist wobei das Copolymer gleichmäßig verteilt wenigstens 10 Prozent der Carbonsäuregruppen der Mono- und Dicarbonsäuren, durch Metallionen mit einer Wertigkiet von 1 bis 3 neutralisiert, enthält.

19. Laminat nach Anspruch 17, dadurch gekennzeichnet, daß das thermoplastische Harz ein Copolymer eines Monomer - Ausgangsstoffes ist, bestehend aus wenigstens 50 Mol-Prozent eines α-Olefins mit der allgemeinen Formel RCH=CH₂, wobei R Wasserstoff oder ein Alkylradikal mit 1 bis 8 Kohlenstoffatomen darstellt, und 0,2 bis 25 Mol-Prozent einer α-β-äthylenischen ungesättigten Monocarbonsäure, wobei gleichmäßig verteilt wenigstens 10 Prozent der Carbonsäuregruppen durch ein Metallion mit einer Wertigkeit von 1 bis 3 neutralisiert sind, oder ein Copolymer mit einem Monomer - Ausgangsstoff, bestehend aus wenigstens 50 Mol-Prozent eines α-Olefins mit der allgemeinen Formel RCH=CH₂, wobei R Wasserstoff oder ein Alkylradikal mit 1 bis 8 Kohlenstoffatomen darstellt, und 0,2 bis 25 Mol-Prozent einer α-β-äthylenischen ungesättigten Dicarbonsäure, wobei gleichmäßig verteilt wenigstens 10 Prozent der Carbonsäuregruppen durch ein einwertiges Metallion neutralisiert sind.

20. Laminat nach Anspruch 18, dadurch gekennzeichnet, daß die Harzschicht (10) Polyäthylen, Polypropylen, Äthylenvinylacetat-copolymer, Äthylenäthylacrylatcopolymer, Acryl-nitril - Butadine - Styrolcopolymer oder eine Mischung von zwei oder mehr Bestandteilen hiervon ist.

21. Laminat nach einem der Ansprüche 17 bis 20, dadurch gekennzeichnet, daß die Harzschicht (10) zwischen zwei Gewebeschichten (12, 14) angeordnet ist.

22. Laminat nach einem der Ansprüche 17 bis 21, dadurch gekennzeichnet, daß die oder jede Gewebeschicht (12, 14) an einem Substrat oder einer Abdeckschicht (SL, OL) durch die Klebewirkung des Styrol - Imprägnierungsmittels befestigt ist.

23. Laminat nach einem der Ansprüche 17 bis 22, dadurch gekennzeichnet, daß die Harzschicht (10) eine Dicke von 0,25 bis 1,3 mm hat.

24. Laminat nach einem der Ansprüche 17 bis 23, dadurch gekennzeichnet, daß das Imprägnierungsmittel Polystyrol oder ein Styrol-copolymer und eines oder mehrere weitere Comonomere enthält.

25. Laminat nach Anspruch 24, dadurch gekennzeichnet, daß das Imprägnierungsmittel ein Copolymer mit 90 Gew.-% Styrol und 10 Gew.-% Butadin enthält.

26. Schuhverstärkungselement, dadurch gekennzeichnet, daß es aus einem Laminat nach einem der Ansprüche 17 bis 25 besteht.

**Revendications**

1. Procédé de fabrication d'un laminé comprenant une couche (10) de résine thermoplastique et, fixée à celle-ci, une couche de tissu (12, 14), le procédé comprenant l'opération d'imprégnation de la couche de tissu avec un saturant de styrène activable par solvant ou par la chaleur, sous forme liquide, et étant caractérisé par les opérations, en préimprégnation, d'extrusion d'une résine thermoplastique pour former la couche de résine et de liaison d'une couche de tissu à la couche de résine fraîchement extrudée, et en ce qu'on provoque le durcissement du saturant de styrène ou on le laisse durcir dans couche de tissu pour rendre cette couche rigide.

2. Procédé suivant la revendication 1, caractérisé en ce que la couche de tissu (12, 14) est appliquée à la couche de résine (10) lorsque la couche de résine sort d'une tuyère à laquelle s'effectue l'extrusion.

3. Procédé suivant la revendication 1 ou 2, caractérisé par l'opération d'activation du saturant durci dans la couche de tissu (12, 14).

4. Procédé suivant la revendication 3, caractérisé en ce que le laminé est moulé à une forme désirée par application de pression au laminé, le saturant étant activé avant ou pendant l'opération de moulage.

5. Procédé suivant la revendication 3, caractérisé par l'opération de liaison d'au moins un substrat ou couche de couverture (SL, OL) à la couche de tissu (12, 14), la liaison étant effectuée par adhérence procurée par le saturant activé.

6. Procédé suivant la revendication 5, caractérisé par l'opération de calandrage du laminé et du substrat ou de la couche de couverture (SL, OL) aprés liaison.

7. Procédé suivant la revendication 5, caractérisé en ce que le laminé et le substrat ou la couche de couverture (SL, OL) sont soumis à une pression de façon à être simultanément liés et moulés à une forme désirée pendant que le saturant est activé et le tissu (12, 14) et les couches de substrat ou de couverture sont en contact.

8. Procédé suivant la revendication 7, caractérisé en ce que le saturant est activé dans une opération qui précède l'opération de liaison et de moulage simultanés.

9. Procédé suivant la revendication 4, 7 ou 8, caractérisé par la chauffage du laminé et de toute couche de substrat ou de couverture (SL, OL) simultanément à l'application de la pression de moulage.

10. Procédé suivant la revendication 5, caractérisé en ce que le laminé est soumis à une pression de façon à être moulé à une forme désirée, dans une opération qui précède la liaison de la couche de substrat ou de couverture (SL, OL).

11. Procédé suivant la revendication 10, caractérisé en ce que le saturant est activé dans l'opération de moulage, pour l'opération de liaison.

12. Procédé suivant l'une quelconque des revendications 3 à 11, caractérisé en ce que le saturant est activé par solvant.

13. Procédé suivant la revendication 12, caractérisé par le trempage du laminé dans le solvant pour provoquer l'activation.

14. Procédé suivant la revendication 12, caractérisé par un revêtement de surface de la couche de tissu avec le solvant pour provoquer l'activation.

15. Procédé suivant l'une des revendications 12 à 14, caractérisé en ce que le solvant est le toluène, la méthyl éthyl cétone, le chlorure de méthylène ou le 1,1,1 - trichloroéthane.

16. Pocédé suivant l'une des revendications 3 à 8, et 10 à 15, caractérisé en ce que le saturant est activé par la chaleur.

17. Laminé comprenant une couche de résine thermoplastique extrudée (10) et, fixée à celle-ci, une couche de tissu (12, 14) imprégnée avec un saturant de styrène activable par solvant ou par la chaleur et durci, caractérisé en ce que la couche de tissu est fixée à la couche de résine par liaison de la couche de tissu à la couche de résine lorsque la couche de résine est fraîchement extrudée.

18. Laminé suivant la revendication 17, caractérisé en ce que la résine thermoplastique est un copolymère ionique d'un produit monomère comprenant au moins 50 moles pour cent d'une α-oléfine de formule générale $RCH=CH_2$, dans laquelle R représente l'hydrogène ou un radical alkyle ayant 1 à 8 atomes de carbone, 0,12 à 25 moles pour cent d'un acide monocarboxylique éthyléniquement insaturé en α,β et 0,2 à 25 moles pour cent d'un acide dicarboxylique éthyléniquement insaturé en α,β, le copolymère comportant au moins 10%, uniformément répartis, des groupes acide carboxylique de ses acides mono- et dicarboxylique qui sont neutralisés par des ions d'un métal de valence 1 à 3.

19. Laminé suivant la revendication 17, caractérisé en ce que la résine thermoplastique est un copolymère d'un mélange monomère comprenant au moins 50 moles pour cent d'une α-oléfine de formule générale $RCH=CH_2$, dans laquelle R représente l'hydrogène ou un radical alkyle ayant 1 à 8 atomes de carbone, et 0,2 à 25 moles pour cent d'un acide monocarboxylique éthyléniquement insaturé en α,β, au moins 10% uniformément répartis des groupes acide carboxylique étant neutralisés par un ion métal d'une valence de 1 à 3 inclusivement, ou bien un copolymère d'un mélange monomère comprenant au moins 50 moles % d'une α-oléfine de formule générale $RCH=CH_2$, dans laquelle R représente l'hydrogène ou un radical alkyle ayant 1 à 8 atomes de carbone, et 0,2 à 25 moles pour cent d'un acide dicarboxylique éthyléniquement insaturé en α,β, au moins 10% uniformément répartis des groupes acide carboxylique étant neutralisés par un ion de métal monovalent.

20. Laminé suivant la revendication 18, caractérisé en ce que la couche de résine (10) est du polyéthylène, du polypropylène, un copolymère éthylène-acétate de vinyle, un copolymère éthylène-acrylate d'éthyle, un copolymère acrylonitrile - butadiène - styrène, ou un mélange de 2 quelconques de ces substances ou davantage.

21. Laminé suivant l'une des revendications 17 à 20, caractérisé en ce que la couche de résine (10) est interposée entre deux couches de tissu (12, 14).

22. Laminé suivant l'une des revendications 17 à 21, caractérisé en ce que la ou chaque couche de tissu (12, 14) est fixée à une couche de substrat ou de couverture (SL, OL) par la propriété adhésive du saturant de styrène.

23. Laminé suivant l'une des revendications 17 à 22, caractérisé en ce que la couche de résine (10) a une épaisseur de 0,25 à 1,3 mm.

24. Laminé suivant l'une des revendications 17 à 23, caractérisé en ce que le saturant comprend du polystyrène ou un copolymère de styrène et d'un ou plusieurs autres comonomères.

25. Laminé suivant la revendication 24, caractérisé en ce que le saturant comprend un copolymère contenant 90% en poids de styrène et 10% en poids de butadiène.

26. Raidisseur de chaussure, caractérisé en ce qu'il comprend un laminé suivant l'une des revendications 17 à 25.